# EUROPÄISCHE PATENTANMELDUNG

(11) **EP 1 154 195 A1**
(43) Veröffentlichungstag der Anmeldung: **14.11.2001**
(21) Anmeldenummer: 00810405.1
(22) Anmeldetag: 12.05.2000
(51) Int. Cl.: F17C 13/04, F16K 1/30, F16K 15/18

(54) **Druckgaskapsel und Aufnahmeteil für die Aufnahme dieser Druckgaskapsel**

(71) Anmelder: Kisag AG, CH-4512 Bellach (CH)
(72) Erfinder: Brüngger, Urs, 2545 Selzach (CH)
(74) Vertreter: BOVARD AG - Patentanwälte

(57) **Zusammenfassung**

Eine Druckgaskapsel (1) umfasst ein Rückschlagventil (3), das aus einem Ventilkörper (4) und einem darin verschiebbaren Ventilstift (8) zusammengesetzt ist. Hierbei weist der Ventilkörper (4) mindestens einen ersten zylindrischen Bereich (10) auf, welcher in den Hohlkörper (2) der Druckgaskapsel (1) hineinragt und an einem im Hohlkörper (2) angebrachten Steg (12) abgestützt ist. Der Randbereich (14) des Hohlkörpers (1) ist um die dem Steg (12) abgewandte Kante des ersten zylindrischen Bereichs (10) umgelegt, an diesen ersten zylindrischen Bereich (10) ist ein rohrförmiges Endstück (13) angeformt, das über den mindestens teilweise umgelegten Rand vorstehend ist. Diese Druckgaskapsel (1) lässt sich somit in Aufnahmeteile (16) von Behälter einsetzen, wobei die Aufnahmeteile (16) unterschiedliche Bauformen aufweisen können.

## Beschreibung

Die vorliegende Erfindung bezieht sich auf eine Druckgaskapsel gemäss dem Oberbegriff des Patentanspruchs 1 sowie einen Aufnahmeteil für die Aufnahme dieser Druckgaskapsel.

Derartige Druckgaskapseln sind bekannt. In der EP-A-0 867 656 ist eine derartige Druckgaskapsel dargestellt, die beispielsweise für Rahmbläser verwendet wird, und die mit einem Rückschlagventil ausgestattet ist. Über dieses Rückschlagventil wird erreicht, dass diese Druckgaskapsel nicht in einer Anwendung vollständig geleert werden muss, sie kann auch nach der vollständigen Entleerung mehrfach wieder gefüllt werden.

Diese Druckgaskapsel ist zum Entleeren in einen Aufnahmeteil einsetzbar, der beispielsweise als Anschlussstück in einem Rahmbläser angeordnet ist, wobei die Dichtung zwischen dem in diesem Aufnahmeteil untergebrachten Hohlbolzen und der Innenseite der durchgehenden Längsbohrung des Ventilkörpers dieser Druckgaskapsel erfolgt, wozu am Hohlbolzen ein Dichtungsring angebracht ist. Die so ausgebildete Druckgaskapsel kann somit nur in einen entsprechend ausgebildeten Aufnahmeteil eingesetzt werden, was deren Anwendung für Rahmbläser, die beispielsweise einen anderen Aufnahmeteil aufweisen, verunmöglicht.

Die Aufgabe der vorliegenden Erfindung besteht nun darin, den Öffnungsbereich der Druckgaskapsel so zu gestalten, dass diese in unterschiedlich gestalteten Aufnahmeteilen einsetzbar und abgedichtet ist, dass das Druckgas in den entsprechenden Aufnahmebehälter ausströmen kann.

Erfindungsgemäss erfolgt die Lösung dieser Aufgabe durch die im Anspruch 1 aufgeführten Merkmale.

Diese Druckgaskapsel ist in unterschiedliche Aufnahmeteile einsetzbar, wie sie in den Ansprüchen 5 bis 8 definiert sind.

In vorteilhafter Weise ist an den ersten zylindrischen Bereich der Druckgaskapsel ein zweiter zylindrischer Bereich angeformt, der in den Hohlkörper hineinragt und dessen Durchmesser kleiner ist, als der Durchmesser des ersten zylindrischen Bereichs. Dadurch kann in einfacher Weise Platz geschaffen werden für den Ventilstift und die entsprechende Dichtung, ohne dass der Halsbereich der Druckgaskapsel eine zu grosse Länge aufweist.

Eine weitere vorteilhafte Ausgestaltung der Druckgaskapsel besteht darin, dass das rohrförmige Endstück einen Durchmesser aufweist, der kleiner ist, als der Durchmesser des ersten zylindrischen Bereichs, und dass das rohrförmige Endstück gegen das vorstehende Ende hin eine sich konisch verengende Aussenform aufweist und insbesondere einen Rand aufweist, der mit einer Abrundung versehen ist. Dadurch kann mit einem Aufnahmeteil, in den diese Druckgaskapsel eingesetzt wird, auch eine dichtende Verbindung erreicht werden, wenn der Rand des rohrförmigen Endstücks auf eine Flachdichtung aufgedrückt wird.

Vorteilhafte Ausgestaltungen der Dichtungsanordnung von Aufnahmeteilen sind in den Ansprüchen 6 bis 8 beschrieben.

Ausführungsformen der vorliegenden Erfindung werden nachfolgend anhand der beiliegenden Zeichnung beispielhaft näher erläutert.

Es zeigt
Fig. 1 den Öffnungsbereich mit Rückschlagventil einer Druckgaskapsel im Schnitt und einem ersten Ausführungsbeispiel eines Aufnahmeteils, ebenfalls im Schnitt;
Fig. 2 die Druckgaskapsel im eingesetzten Zustand im Aufnahmeteil gemäss Fig. 1, im Schnitt dargestellt;
Fig. 3 den Öffnungsbereich der Druckgaskapsel mit Rückschlagventil im Schnitt und einer weiteren Ausführungsform eines Aufnahmeteils, ebenfalls im Schnitt dargestellt; und
Fig. 4 die Druckgaskapsel im eingesetzten Zustand in den Aufnahmeteil gemäss Fig. 3, im Schnitt dargestellt.

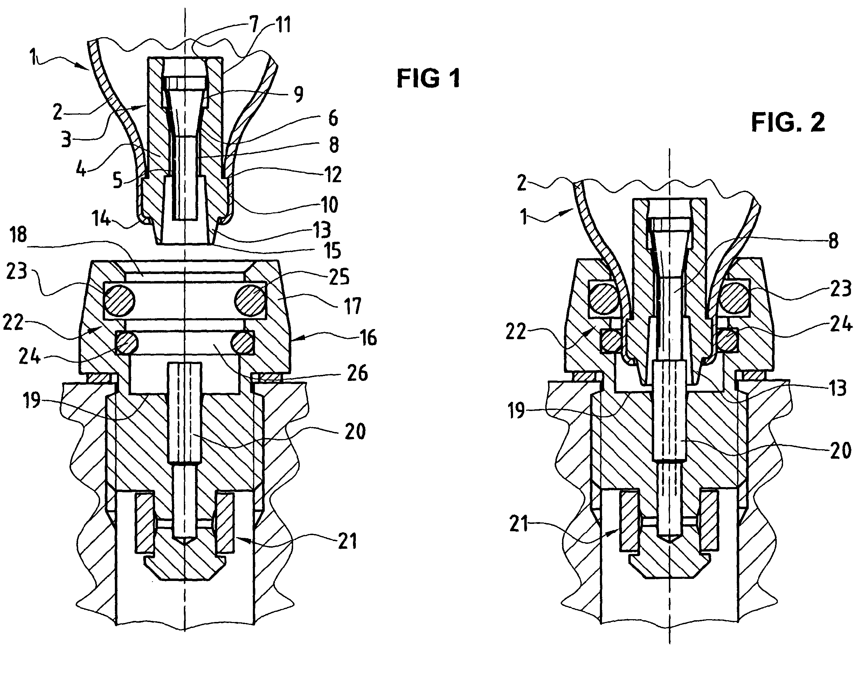

Wie aus den Fig. 1 und 2 ersichtlich ist, besteht die Druckgaskapsel 1 aus einem Hohlkörper 2, von dem hier nur der vordere Teil ersichtlich ist, welcher mit einem Rückschlagventil 3 versehen ist. Das Rückschlagventil 3 besteht aus einem Ventilkörper 4, der mit einer durchgehenden Längsbohrung 5 ausgestattet ist. Diese Längsbohrung weist eine Verengung 6 auf, während am innenseitigen Ende ein Anschlag 7 angebracht ist.

Längsverschiebbar in der Längsbohrung 5 ist ein Ventilstift 8 gehalten, der mit einer Verdickung 9 ausgestattet ist. Diese Verdickung 9 bildet mit der Verengung 6 der Längsbohrung 5 in bekannter Weise die Dichtfläche. Der Anschlag 7 dient dazu, dass der Ventilstift 8 nicht aus der Längsbohrung 5 in den Hohlkörper 2 hinein ausgestossen werden kann.

Der Ventilkörper 4 weist einen ersten zylindrischen Bereich 10 auf. An diesen ersten zylindrischen Bereich 10 ist ein zweiter zylindrischer Bereich 11 angeformt, der in den Hohlkörper 2 hineinragt. Der Durchmesser dieses zweiten zylindrischen Bereichs 11 ist kleiner als der Durchmesser des ersten zylindrischen Bereichs 10. Dadurch wird zwischen dem ersten zylindrischen Bereich 10 und dem zweiten zylindrischen Bereich 11 ein Absatz gebildet. Im Hohlkörper 2 ist ein umlaufender Steg 12 angebracht, auf dem sich dieser Absatz des Ventilkörpers 4 im eingesetzten Zustand abstützt.

Am ersten zylindrischen Bereich 10 ist ein rohrförmiges Endstück 13 angeformt, das über den Hohlkörper 2 vorstehend ist. Dieses rohrförmige Endstück 13 weist einen Durchmesser auf, der kleiner ist als der Durchmesser des ersten zylindrischen Bereichs 10. Dadurch wird auch hier ein Absatz gebildet, um welchen der Randbereich 14 des Hohlkörpers 2 umgelegt ist, der Ventilkörper 4 ist somit in optimaler Weise dicht mit dem Hohlkörper 2 verbunden. Das rohrförmige Endstück 13 weist gegen das vorstehende Ende hin eine sich konisch verengende Aussenform auf. Der Rand des vorstehenden Endes des rohrförmigen Endstückes 13 ist mit einer Abrundung 15 versehen.

Das in dieser Druckgaskapsel 1 enthaltene Druckgas kann nun in einen Behälter, beispielsweise in einen Rahmbläser, abgegeben werden. Hierzu ist dieser Behälter mit einem Aufnahmeteil 16 versehen, wovon ein erstes Ausführungsbeispiel ebenfalls in den Fig. 1 und 2 dargestellt ist. Dieser Aufnahmeteil 16 umfasst einen zylindrischen Körper 17, der mit einer Bohrung 18 versehen ist. In den Boden 19 der Bohrung 18 ist ein Hohlbolzen 20 eingesetzt, der in bekannter Weise mit einer Ventilanordnung 21 zusammenwirkt. Der Aufnahmeteil ist ferner mit einer Dichtungsanordnung 22 ausgestattet, die im hier dargestellten Ausführungsbeispiel aus einem ersten O-Ring 23 und einem zweiten O-Ring 24 besteht, die in einer ersten umlaufenden Nut 25 bzw. in einer weiteren umlaufenden Nut 26, die in der Wandung der Bohrung 18 angebracht sind, untergebracht sind.

Die Druckgaskapsel 1 kann nun in diesen Aufnahmeteil eingesetzt werden, die Öffnung der Druckgaskapsel wird durch den ersten O-Ring 23 und den zweiten O-Ring 24, die sich aussenseitig um den Hohlkörper 2 anlegen, abgedichtet, der Hohlbolzen 20 drückt den Ventilstift 8 der Druckgaskapsel 1 von der Dichtungsfläche weg, das in der Druckgaskapsel 1 enthaltene Gas kann über den Aufnahmeteil 16 in den entsprechenden Behälter einfliessen.

Die Druckgaskapsel 1 kann auch aus dem Aufnahmeteil 16 weggenommen werden, wenn die Druckgaskapsel noch nicht vollständig leer ist, der Ventilstift 8 wird hierbei wieder in die dichtende Position gebracht.

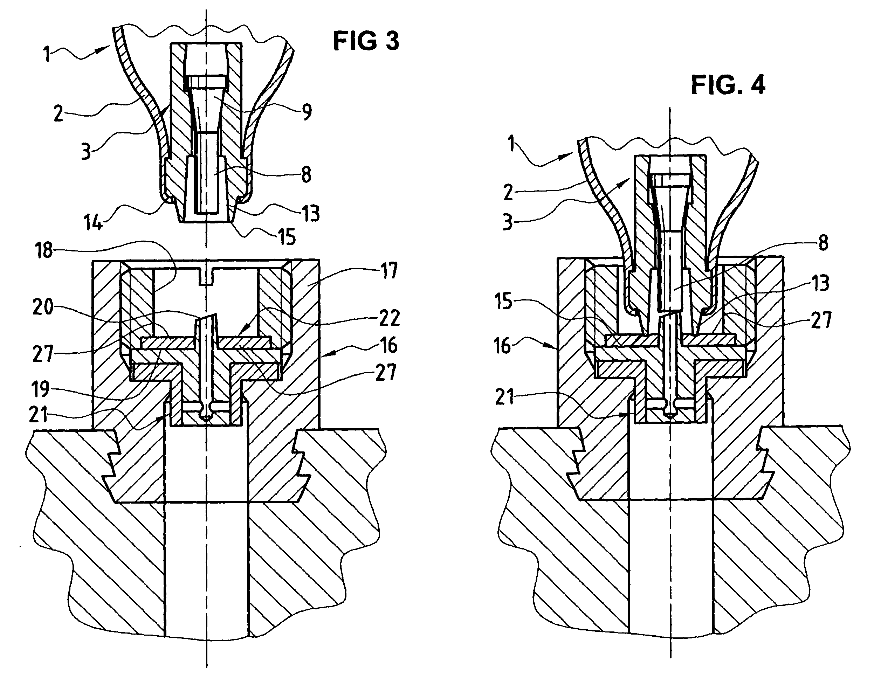

Aus den Fig. 3 und 4 ist wiederum der Vorderteil einer Druckgaskapsel 1 entnehmbar, die identisch aufgebaut ist, wie diejenige, die in den Fig. 1 und 2 dargestellt und vorgängig beschrieben worden ist, so dass auf eine nochmalige Beschreibung verzichtet werden kann. Diese Druckgaskapsel 1 ist in eine weitere Ausführungsform eines Aufnahmeteils 16 einführbar, der an einem Behälter, beispielsweise an einem Rahmbläser befestigt ist. Dieser Aufnahmeteil 16 weist ebenfalls einen zylindrischen Körper 17 auf, der mit einer Bohrung 18 versehen ist. Der Boden 19 der Bohrung ist wiederum mit einem Hohlbolzen 20 versehen, der mit einer Ventilanordnung 21 zusammenwirkt.

Die Dichtungsanordnung 22 besteht bei diesem Ausführungsbeispiel aus einer Flachringdichtung 27, die den Hohlbolzen 20 umgibt.

Wenn nun das Druckgas, das in der Druckgaskapsel 1 enthalten ist, über den Aufnahmeteil 16 in den entsprechenden Behälter gebracht werden soll, wird die Druckgaskapsel 1 in den Aufnahmeteil 16 eingesetzt, wie dies in Fig. 4 dargestellt ist. Die Abrundung 15 des rohrförmigen Endstücks 13 wird hierbei gegen die Flachringdichtung 27 gepresst, diese Flachringdichtung wird wegen ihres elastischen Verhaltens zusammengedrückt, der Hohlbolzen 20 drückt den Ventilstift 8 von der Dichtfläche weg, das Druckgas kann in den Behälter strömen. Auch hier kann die Druckgaskapsel 1 aus dem Aufnahmeteil 16 weggenommen werden, bevor diese vollständig entleert ist, der Ventilstift wird wieder gegen die Dichtflächen gepresst, die Druckgaskapsel ist somit wiederum dicht verschlossen.

Mit dieser erfindungsgemässen Anordnung ist es möglich, eine Druckgaskapsel der genannten Art in Aufnahmeteile einzusetzen, die eine unterschiedliche Bauform haben, wodurch der Einsatz dieser Druckgaskapsel in vielfältiger Weise ermöglicht wird.

## Patentansprüche

1. Druckgaskapsel (1), welche einen mit einer Öffnung versehenen Hohlkörper (2) und ein die Öffnung verschliessendes Rückschlagventil (3) umfasst, das aus einem Ventilkörper (4) besteht, der mit einer durchgehenden Längsbohrung (5) versehen ist, in welcher eine Verengung (6) und am innenseitigen Ende ein Anschlag (7) angebracht ist, und in welcher Längsbohrung (5) ein Ventilstift (8) verschiebbar angeordnet ist, welcher mit einer Verdickung (9) versehen ist, die zusammen mit der Verengung (6) eine Dichtfläche bildet, und bei welcher der Ventilkörper (4) mit dem Hohlkörper (2) dicht verbunden ist, welche Druckgaskapsel (1) in einen Aufnahmeteil (16) eines Behälters zur Abgabe des Gases einsetzbar ist, **dadurch gekennzeichnet, dass** der Ventilkörper (4) mindestens einen ersten zylindrischen Bereich (10) aufweist, welcher in den Hohlkörper (2) hineinragt und an einem im Hohlkörper (2) angebrachten Steg (12) abgestützt ist, dass der Randbereich (14) des Hohlkörpers (2) mindestens teilweise um die dem Steg (12) abgewandte Kante des ersten zylindrischen Bereichs (10) umgelegt ist, und dass an diesen ersten zylindrischen Bereich (10) ein rohrförmiges Endstück (13) angeformt ist, das über den mindestens teilweise umgelegten Rand des Hohlkörpers (2) vorstehend ist.

2. Druckgaskapsel nach Anspruch 1, **dadurch gekennzeichnet, dass** an den ersten zylindrischen Bereich (10) ein zweiter zylindrischer Bereich (11) angeformt ist, der in den Hohlkörper (2) hineinragt und dessen Durchmesser kleiner ist, als der Durchmesser des ersten zylindrischen Bereichs (10).

3. Druckgaskapsel nach Anspruch 1 oder 2, **dadurch gekennzeichnet, dass** das rohrförmige Endstück (13) einen Durchmesser aufweist, der kleiner ist, als der Durchmesser des ersten zylindrischen Bereichs (10), und dass das rohrförmige Endstück (13) gegen das vorstehende Ende hin eine sich konisch verengende Aussenform aufweist.

4. Druckgaskapsel nach einem der Ansprüche 1 bis 3, **dadurch gekennzeichnet, dass** das vorstehende Ende des rohrförmigen Endstücks (13) einen Rand (15) aufweist, der mit einer Abrundung versehen ist.

5. Aufnahmeteil (16) für die Aufnahme einer Druckgaskapsel (1) nach einem der Ansprüche 1 bis 4, welcher einen zylindrischen Körper (17) mit einer Bohrung (18), in welche der Hohlkörper (2) der Druckgaskapsel (1) mit der Öffnung voran einsteckbar ist, einen Hohlbolzen (20), der in den Boden (19) der Bohrung (18) eingesetzt und befestigt ist und der mit dem Ventilstift (8) der Druckgaskapsel (1) zusammenwirkt, und eine Dichtungsanordnung (22) aufweist, **dadurch gekennzeichnet, dass** die Dichtungsanordnung (22) aus mindestens einem Dichtungsring (23; 24; 27) besteht, der im Inneren der Bohrung (18) des Aufnahmeteils (16) angeordnet ist.

6. Aufnahmeteil nach Anspruch 5, **dadurch gekennzeichnet, dass** der mindestens eine Dichtungsring aus einem O-Ring (23) besteht, der in einer ersten umlaufenden Nut (25), die in der Wandung der Bohrung (18) angebracht ist, untergebracht ist.

7. Aufnahmeteil nach Anspruch 6, **dadurch gekennzeichnet, dass** ein weiterer O- Ring (24) vorgesehen ist, der in einer weiteren umlaufenden Nut (26), die in der Wandung der Bohrung (18) angebracht ist und parallel zur ersten Nut verläuft (25), untergebracht ist.

8. Aufnahmeteil nach einem der Ansprüche 5 bis 7, **dadurch gekennzeichnet, dass** auf den Boden (19) der Bohrung (18) eine Flachringdichtung (27) eingesetzt ist, die den Hohlbolzen (20) umgibt.
